# EUROPEAN PATENT APPLICATION

(11) **EP 1 225 381 A1**
(43) Date of publication of application: **24.07.2002**
(21) Application number: 02250168.8
(22) Date of filing: 10.01.2002
(51) Int. Cl.: F16K 17/16, F16K 11/087, F16K 17/04

(54) **Safety valve and safety valve system**

(30) Priority: 22.01.2001 US 767105
(71) Applicant: Henry Technologies, Inc., Melrose Park, Illinois 60160 (US)
(72) Inventor: Schwarz, Paul, Westmont, Illinois 60559 (US); Palla, David, Westmond, Illinois 60559 (US); Gugala, Zbigniew Henry, Spring Grove, Illinois 60081-8079 (US)
(74) Representative: Ward, David Ian

(57) **Abstract**

A manifold safety valve assembly (10) is disclosed. The assembly (10) includes a manifold (12) having at least two outlets and a flow director valve (22) disposed between the outlets to direct fluid pressure from an inlet to one or the other of the outlets. Safety valve mechanisms (40, 42) are mounted at each manifold outlet. Preferably, each safety valve (40, 42) comprises a body (44) having a main valve fluid passage (48). A rupture disk (52) may be provided to block an upstream location of the main valve fluid passage (48) and a pressure relief mechanism (50) may be provided to block a relatively downstream portion of the main valve fluid passage (48). In a preferred embodiment, a secondary fluid passage (54) leads from the main valve fluid passage (48) at a point between the rupture disk (52) and the pressure relief mechanism (50) to a gauge port (56).

## Description

### Background of the Invention

This invention relates generally to safety valves and safety valve systems for refrigeration systems and similar industrial applications, and more particularly concerns an arrangement of novel, lightweight, full capacity substantially leak proof safety valves.

Large, complex refrigeration systems are required to provide air-conditioning in large office buildings; to freeze meats, vegetables and other foodstuffs; to maintain the frozen food in below -- freezing conditions in large warehouses; and to provide relatively low -- temperature environments in other applications. These refrigeration systems typically use anhydrous ammonia or chlorofluorocarbons as refrigerant operating fluids. In some parts of the refrigerating system, the refrigerant is in a liquid state; and in other parts of the system the refrigerant is a gaseous form. The refrigeration system compressor or compressors operate to pressurize the gaseous refrigerant is pressurized; the pressure in the system pipes and other equipment on the so-called high pressure side can be considerably more than the outside or ambient pressure.

Because relatively high-pressure gaseous refrigerant is made to flow through extended lengths of complex piping and other equipment, safety has long been a concern of the refrigeration engineer. The American Society of Mechanical Engineers and other engineering and governmental organizations have consequently provided standards, regulations and building codes governing the refrigeration systems. These standards, codes and regulations typically require the use of safety valves within the systems, and specify how the safety valves must operate, where they must be installed, and other requirements. Accordingly, refrigeration safety valves must be designed and manufactured with these standards, codes and regulations in mind.

Previous safety valve designs have included frangible diaphragms or rupture disks, or spring-loaded pressure relief devices. A valve which includes both a rupture disk and a pressure relief device is shown in U.S. patent 4,448,429.

These valves have been installed in dual array arrangements which permit one safety valve to be isolated, removed, serviced, and replaced while a second safety valve is connected to the refrigeration system so as to provide the necessary safety for the operating system. A dual array manifold and ball valve for directing refrigerant pressure to one or another of two oppositely disposed safety valves is suggested in U.S. patent 5,577,709.

It is a principle object of this invention to provide a relatively lightweight, leak proof combination rupture disk and relief safety valve. A related object is to provide such a valve in a design format that does not require valve or system capacity reduction.

It is another object of this invention to provide a unitary safety valve system having two or more such safety valves and an interconnecting lightweight, simple manifold having an intermediate valve arranged to direct pressure to one or to the other of the safety valves.

Other objects and advantages of the invention will become apparent upon reading the following detailed description and upon reference to the drawings. Throughout the drawings, like reference numerals refer to like parts.

### Description of the Drawings

Figure 1 is a top plan view of the manifold as it appears when relief safety valves are installed in opposite ends of the manifold.
Figure 2 is an end elevational view of the manifold and an installed safety relief valve.
Figure 3 is a sectional view taking substantially in the plane of line 3- 3 in figure 1.
Figure 4 is a sectional view taking substantially in the plane of line 4-4 in figure 2.
Figure 5 is a sectional view taking substantially in the plane of line 5 - 5 in figure 2.

While the invention will be described in connection with the preferred embodiment and procedure, it will be understood that it is not intended to limit the invention to this embodiment or procedure. On the contrary, it is intended to cover all alternatives, modifications and equivalents as may be included within the spirit and scope of the invention.

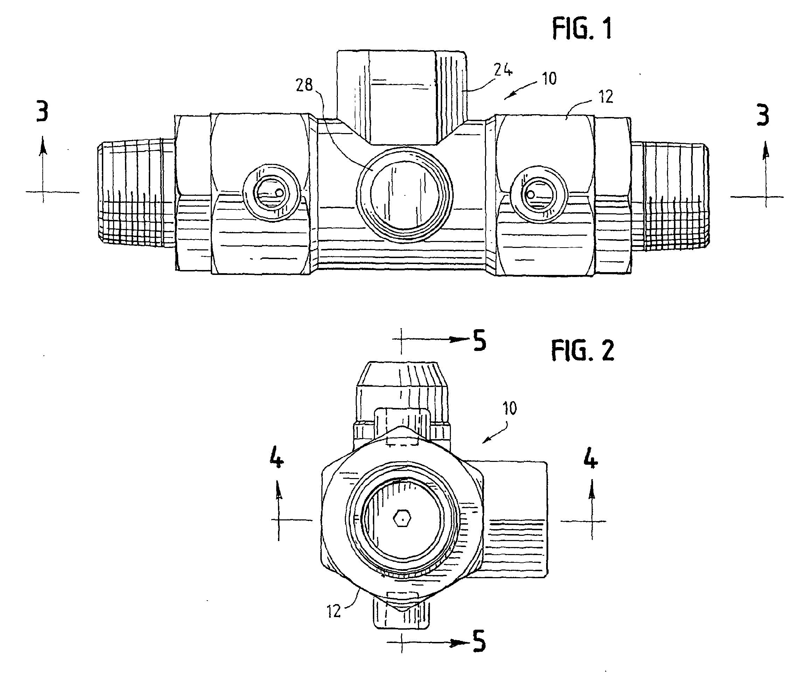

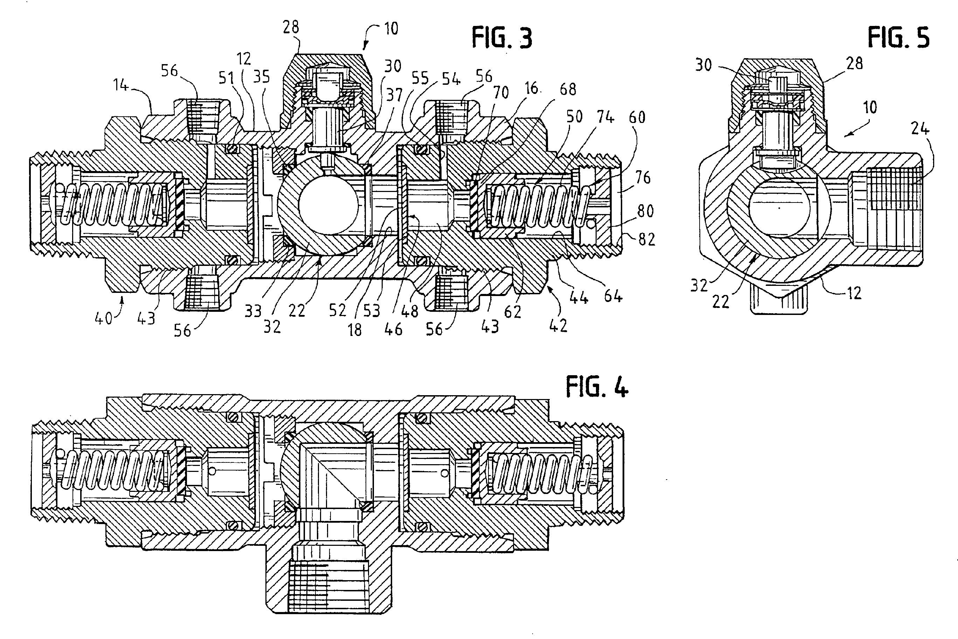

Turning more particularly to the drawings, there is shown a manifold safety valve assembly 10. In accordance with one aspect of the invention, this valve assembly 10 includes a relatively lightweight, simple manifold device 12. Extending between the opposite ends 14, 16 of the manifold is a relatively large main passageway 18. A flow director valve, such as a quarter turn ball valve 22, is disposed at an intermediate location within the main fluid passageway 18. As suggested particularly in figures 1 and 5, pressurized refrigerant or other fluid can be directed to a manifold inlet 24. A valve stem cap 28 can be removed and a valve stem 30 can be grasped, as by a wrench or other device, and twisted so as to orient an operating ball 32 of the ball valve 22 so as to direct fluid pressure to one or the other of the manifold ends 14, 16. During assembly of the manifold device 12, a gland 33 is threaded into the position shown in figure 3 to snugly retain the ball 32 in its operating position. Teflon ball seals 35 and 37 prohibit pressure and fluid leaks.

In accordance with one aspect of the invention, substantially identical pressure relief valves 40, 42 are secured, as by threads 43 or other means, within and upon each of the opposite ends 14, 16 of the manifold 12. This arrangement is lightweight, simple, and provides an inexpensive yet effective array of two or more pressure relief safety valves for use in the refrigerant system.

In accordance with another aspect of the invention, each of these valves 40, 42 is substantially identical in construction. Each valve comprises a valve body 44. From a relatively upstream end 46, a passageway 48 leads from the main manifold passageway 18 toward the pressure relief mechanism 50. O-rings 51, 55 prohibit pressure leaks.

Near the upstream end 46 of the pressure relief valve is a rupture disk 52. This rupture disk 52 is securely sealed across the passageway 48, completely blocking it so that no refrigerant or other fluid will pass across the rupture disk site unless such excessively high-pressure is applied to the rupture disk 52 so as to break it. This disc 52 is sealed across the valve mouth 53 so as to prohibit any detectable amount of refrigerant from escaping from the system.

If the rupture disk 52 is breached by excessively high refrigerant pressure, fluid pressure enters the passage 48. Some of the pressurized fluid and the high pressure are directed along a secondary or weep passage 54 to an outlet or gauge port 56. Here, two such outlets 56 are oppositely disposed at opposite ends of the manifold 12. These outlets 56 can be connected to pressure gauges, alarms, or other devices to indicate that an overpressure condition has occurred.

This novel valve system not only provides an alarm indication that an overpressure condition has occurred, but it also permits the excessively high pressure to be vented, discharged to a surge tank (not shown) or otherwise dissipated in a safe manner. To this end, the relief valves 40, 42 include a pressure relief valve mechanism 60, which here includes a piston 62 adapted to be slidably received in an enlarged extension of the fluid passageway 48. A piston seal member 68, which can be formed of silicone rubber or other resilient material, is adapted to engage a manifold seat 70 and normally seal and block the passage from pressure drop and fluid loss. However, when the rupture disk 52 is broken and pressurized fluid is introduced into the valve passageway 48, the piston seat 68 disengages from its seat 70 so as to permit fluid to flow past the piston 62.

To urge the piston and seat 68 into normal engagement with the seat 70, and thus prevent any substantial fluid flow and pressure loss under normal system operating conditions and pressures, a biasing device such as a coil spring 74 is provided. Escaping pressurized fluid passes over the spring 74 as well, and out a valve exhaust port 76. These exhaust port 76 can be connected by suitable piping or other fluid passage devices to pressure relief or surge tanks or to vents (not shown). In accordance with another aspect of the invention, this arrangement of disks and valves permits the use of valves at their full rated capacity; the expense of oversize valves is rendered unnecessary. A gauge or other indicator (not shown) can be connected to the gauge port 56 to indicate that pressure which is in excess of the pressure required to rupture the rupture disk has been experienced in a valve.

Good practice requires that, when an overpressure condition has been experienced and a rupture disk has been breached, the safety valve be removed and replaced. Experienced has shown that, once a pressure relief mechanism has been actuated, the mechanism may not re-seat properly or, if it does re-seat properly, the pressure relief mechanism may subsequently un-seat or otherwise operate at a pressure other than the actuation pressure at which it was originally set. The present novel device permits a pressure relief safety valve (for example, the valve 42) to be easily replaced without shutting down the entire system. The ball valve 22 can simply be turned or configured so as to direct fluid pressure away from the previously actuated valve 42 and toward the un- actuated valve 40 by simply turning the stem of the ball valve 22. When the ball valve 22 has been reoriented, the actuated safety valve 42 can simply be unscrewed from the manifold 12 and another, fresh, un-actuated valve can be installed in its place.

Assembling and calibrating one of these novel valves 40, 42 involves a simple, quick and precise process, in accordance with yet another aspect of the invention. The assembled valve is simply installed in a manifold or similar jig, and pressure is then simultaneously applied to both sides of the rupture disk 52 through the main passageway 48 and through the secondary passageway 54 via the alarm or gauge port 56. This pressure applied to both sides of the rupture disk 52 is arranged to be the pressure at which the relief valve mechanism is to be actuated. An adjustment gland 80 is then turned along threads 82 or other devices toward or away from the piston so as to increase or decrease compression pressure on the piston through the spring 74. The valve is adjusted in this way so that the piston just begins to lift from its seat 70 and permit pressure relief. When the valve has been adjusted, the pressure on both sides of the rupture disk 52 is gradually and simultaneously relieved to an ambient state.

## Claims

1. A manifold safety valve assembly (10) comprising in combination, a manifold (12) defining a fluid inlet and at least a first and a second fluid outlet, the first and second fluid outlets being connected by a manifold main fluid passageway (18), a flow director valve (22) disposed between the inlet and the first and second outlets in the manifold main fluid passageway (18), and a safety valve (40, 42) being mounted at each of the first and second manifold outlets.

2. A manifold safety valve assembly (10) according to claim 1, wherein at least one of the safety valves (40, 42) comprises a body (44) defining a valve main fluid passageway (48) and having an upstream end and a downstream end, a rupture disk (52) normally completely blocking a relatively upstream portion of the valve main fluid passageway (48), and a pressure relief mechanism (50) normally blocking a relatively downstream portion of the valve main fluid passageway (48).

3. A manifold safety valve assembly (10) according to claim 2, wherein said valve body (44) further defines a secondary fluid passageway (54) intersecting the valve main fluid passageway (48) for directing fluid and fluid pressure from the valve main passageway (48) to an additional outlet port (56).

4. A manifold safety valve assembly (10) according to any preceding claim, wherein said flow director valve (22) comprises a three-way ball valve.

5. A manifold safety valve assembly (10) according to claim 4, wherein said three-way ball valve is adapted to divert fluid and fluid pressure to the first outlet and its safety valve (40), or alternatively to the second outlet and its safety valve (42), in each case prohibiting fluid flow and pressure to the non-selected second or first manifold outlet and safety valve (42, 40) respectively.

6. A manifold safety valve assembly (10) according to claim 4 or 5, wherein said three-way ball valve includes a valve stem (30) extending to a point outside the manifold (12) for permitting the configuration of the ball valve to be changed.

7. A manifold safety valve assembly (10) according to claim 6 further including indicia for indicating the configuration of the three-way ball valve.

8. A safety valve (40, 42) comprising, in combination, a body (44) defining a main valve fluid passage (48), the main valve fluid passage (48) having an upstream end and a downstream end, a rupture disk (52) normally blocking a relatively upstream portion of the main valve fluid passage (48), and a pressure relief mechanism (50) normally blocking a relatively downstream portion of the main fluid passage (48).

9. A safety valve (40, 42) according to claim 8, wherein said rupture disk (52) is adapted to prevent the passage of any fluid or fluid pressure along the main valve fluid passage (48) unless the rupture disk (52) is ruptured.

10. A safety valve (40, 42) according to claim 8 or 9, wherein said rupture disk (52) is adapted to rupture and permit fluid flow and fluid pressure to pass the ruptured disk (52) at a predetermined rupture pressure, and wherein said pressure relief mechanism (50) is adapted to permit fluid flow past the predetermined rupture pressure.

11. A safety valve (40, 42) according to any one of claims 8 to 10, wherein the main valve fluid passage (48) is connected to a vent or collector device at a location downstream of said pressure relief mechanism (50).

12. A safety valve (40, 42) according to any of claims 8 to 11, wherein said safety valve body (44) further defines a secondary passage (54) leading from said valve main passage (48) at a point located between said rupture disk (52) and said pressure relief mechanism (50) to a gauge port (56).

13. A safety valve (40, 42) according to claim 12 wherein said gauge port (56) is adapted to communicate with a pressure-indicating device.

14. A safety valve (40, 42) according to claim 12, wherein said main valve fluid passage (48) communicates with an indicator for indicating that a pressure which is in excess of the predetermined pressure required to rupture said rupture disk (52) has been experienced in said valve (40, 42).

15. A safety valve (40, 42) according to any one of claims 8 to 14, wherein said pressure relief mechanism (50) includes a piston (62) and a biasing device (74) engaging the piston (62) for urging the piston (62) into a fluid pressure - sealing position in said main valve passage (48) with a predetermined pressure.

16. A safety valve (40, 42) according to claim 15 further including an adjustment mechanism (80, 82) for adjusting the predetermined pressure applied by the biasing device (74) to said piston (62).

17. A safety valve according to claims 15 or 16, wherein said piston (62) includes a seal element (68) for engaging the main valve passage seal seat (70), at least one passage being at least partly formed by said piston (62) to permit fluid flow and pressure to pass by the piston (62) when the piston (62) moves away from the sealing seat (70).

18. A method of adjusting a safety valve (40, 42), the safety valve (40, 42) comprising a body (44) defining a main fluid passage (48) and having an upstream end and a downstream end, a rupture disk (52) normally blocking fluid flow from the upstream portion of the main fluid passage (48) toward the downstream portion of the main fluid passage (48), and a pressure relief mechanism (50) normally blocking a relatively downstream portion of the main fluid passage (48), the method comprising the steps of applying a pressure to the upstream side of the rupture disk (52), applying substantially the same pressure to the downstream side of the rupture disk (52) and also to the upstream side of the pressure relief mechanism (50), and thereafter adjusting the pressure relief mechanism (50) to begin to open and permit pressure relief and fluid flow at substantially the same pressure as that which is expected to rupture the rupture disk (52), and thereafter simultaneously and substantially relieving the pressure on both sides of the rupture disk (52).
